# EUROPEAN PATENT APPLICATION

(11) **EP 1 734 225 A1**
(43) Date of publication of application: **20.12.2006**
(21) Application number: 06253014.2
(22) Date of filing: 12.06.2006
(51) Int. Cl.: F01D 5/00, B23K 9/04, B23P 9/04, B23K 101/00

(54) **Systematic cold working of welds**

(30) Priority: 15.06.2005 US 153695
(71) Applicant: GENERAL ELECTRIC COMPANY, Schenectady, New York 12345 (US)
(72) Inventor: Hoelle, Tom, West Chester Ohio 45069 (US); Finton, Troy, Cincinnati Ohio 45249 (US); Stallkamp, Mike, Cincinnati Ohio 45248 (US); Grubbs, Gray Welch, Williamstown Kentucky 41097 (US); Steadman, David Alan, Sardinia Ohio 45171 (US); Kelley, Thomas Joseph, Cincinnati Ohio 45241 (US)
(74) Representative: Pedder, James Cuthbert

(57) **Abstract**

A method for welding a component includes the steps of: selecting a weld area (120) in the part which is located near a feature of interest; applying a weld to a portion of the weld area (120), wherein solidification of the first weld (126) causes deviation of the feature from a desired position; and cold working the first weld (126, 158) so as to impart plastic deformation therein to a degree that material is extruded outward from the first weld (126). The deviation of the feature is at least partially reversed. The method may include the step of applying and cold working a series of spaced-apart tack welds (126) in a defect, and then applying and cold-working a series of welds between the tack welds (126).

## Description

This invention relates generally to a welding method and more particularly to a method of systematically cold working parts undergoing a weld repair.

Many devices include metallic components which are complex and expensive. When these components become damaged or worn, it is desirable whenever possible to repair these components instead of replacing them. Relatively small defects can cause these parts to become unusable. For example, gas turbine engines typically include one or more annular casings which include features such as mounting flanges and bolt holes. The acceptable dimensional tolerances of these features are on the order of a few thousands of an inch.

Weld repairs are well known in the prior art. They are especially useful for the repairing of cracks or dimensional restoration in complex components such as forgings, castings, or welded assemblies. During a weld repair, a portion of a component is heated, for example with a concentrated flame or electrical current, until it softens and flows, forming a weld puddle. A filler material may be melted into the weld puddle during this process. When the heat is removed, the weld puddle cools and re-solidifies. During the solidification process there is a substantial amount of contraction shrinkage, and the weld is left in a state of residual tensile stress. This can lead to cracking of the weld itself, and also causes weld distortion in nearby features on the component.

The economic feasibility of weld repairing components is based largely on controlling this weld initiated distortion, and on the cost of tooling and labor required to restore the distorted components to an acceptable condition. Prior art methods of controlling distortion include restrainment fixtures, which over-restrain the desired feature. The over-restrained area compensates for weld stresses which cause distortion. Any remaining deformities are then corrected by techniques such as restrained heat treatment, metal spray buildup, and machining.

However, even with these techniques, many components require that features be replaced because of uncontrollable weld repair techniques or excessive restoration costs.

Accordingly, there is a need for a method of welding components while maintaining their dimensional integrity.

The above-mentioned need is met by the present invention, which according to one aspect provides a method for welding a component, including the steps of: selecting a weld area in the part, the weld area being located near a feature of interest; applying a first weld to a portion of the weld area, wherein solidification of the first weld causes deviation of the feature from a desired position; and cold working the first weld so as to impart plastic deformation therein to a degree that material is extruded outward from the first weld, and the deviation is at least partially reversed.

According to another aspect of the invention, a method for repairing a component includes the steps of: selecting a defect in the component, the defect being located near a feature of interest; applying a first tack weld to a the defect, wherein the first tack weld causes deviation of the feature from a desired position; cold working the first tack weld to impart plastic deformation therein and to extrude material outward from the first tack weld and at least partially reverse the deviation; applying at least one subsequent tack weld to the defect; and cold working each subsequent tack weld after the subsequent tack weld is applied.

The invention will now be described in greater detail, by way of example, with reference to the drawings, in which:-
Figure 1 is a perspective view of a component having a defect to be repaired;
Figure 2 is a partial cross-sectional view of a the component of Figure 1 with a weld disposed therein;
Figure 3 is a top view of a portion of the component of Figure 2;
Figure 4 is front view of a portion of the component of Figure 3;
Figure 5 is a top view of a portion of the component of Figure 1 illustrating an exemplary tack welding sequence;
Figure 6 is a partial cross-sectional view of the component of Figure 1 along with a press for performing a cold-working operation thereupon;
Figure 7 is a partial cross-sectional view of the component of Figure 1 at the beginning of a cold-working operation;
Figure 8 is a partial cross-sectional view of the component of Figure 1 during a cold-working operation;
Figure 9 is a partial cross-sectional view of the component of Figure 1 after completion of a cold-working operation;
Figure 10 is a top view of a portion of the component of Figure 1 illustrating an exemplary welding sequence;
Figure 11 is a top view of a portion of another component having a defect to be repaired;
Figure 12 is a view taken along lines 12-12 of Figure 11;
Figure 13 is a top view of the component of Figure 11 after a preparation step has been completed;
Figure 14 is a view taken along lines 14-14 of Figure 13;
Figure 15 is a top view of the component of Figure 11 illustrating an exemplary tack welding sequence;
Figure 16 is a view taken along lines 16-16 of Figure 15;
Figure 17 is a top view of the component of Figure 11, illustrating an exemplary welding sequence;
Figure 18 is a view taken along lines 18-18 of Figure 12;
Figure 19 is a top view of another component having a defect to be repaired;
Figure 20 is a view taken along lines 20-20 of Figure 19;
Figure 21 is a top view of the component of Figure 19, illustrating an exemplary welding sequence; and
Figure 22 is a view taken along lines 22-22 of Figure 21.

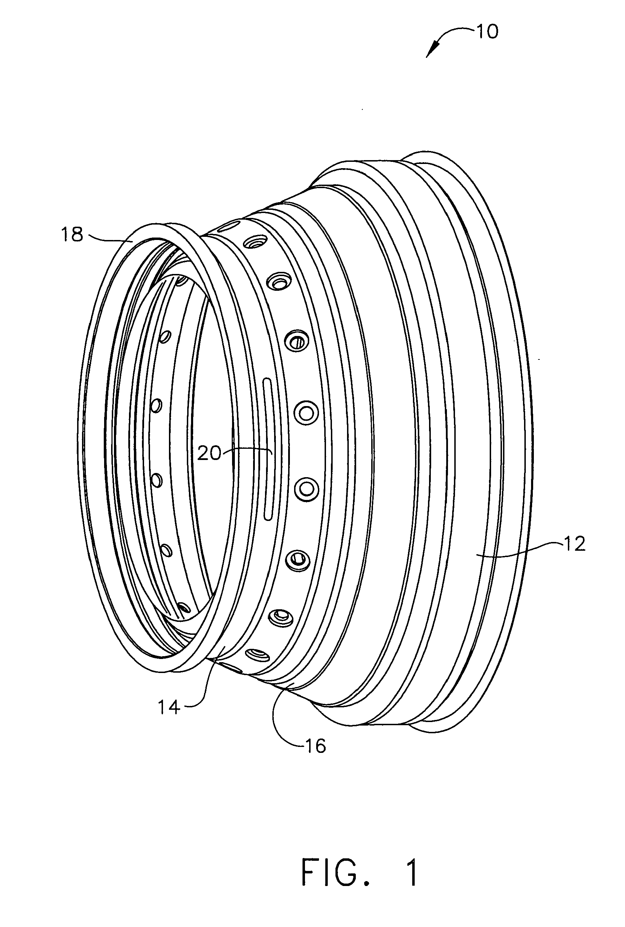

Referring to the drawings wherein identical reference numerals denote the same elements throughout the various views, Figure 1 illustrates an exemplary component 10 to be repaired. In the illustrated example the component 10 is a combustion casing for a gas turbine engine, however it will be understood that the method of the present invention may be used with any component that is capable of being welded. The method may also be used to upgrade existing components or construct new components. The case 10 has a generally cylindrical aft section 12 and a generally cylindrical forward section 14 connected by a tapered section 16. A radially upstanding forward flange 18 extends around the front end of the forward section 14.

The casing 10 has a representative defect 20 disposed in the forward section 14 near the forward flange 18. In this particular example the defect 20 takes the form of an exterior gouge which extends partially through the thickness of the casing 10. The method of the present invention is equally applicable to any other kind of defect which can be repaired by welding, such as cracks or holes. Such a defect 20 can be repaired by creating a build up of filler material larger than the defect and then removing the excess material so that the external surface matches the surrounding part of the casing 10.

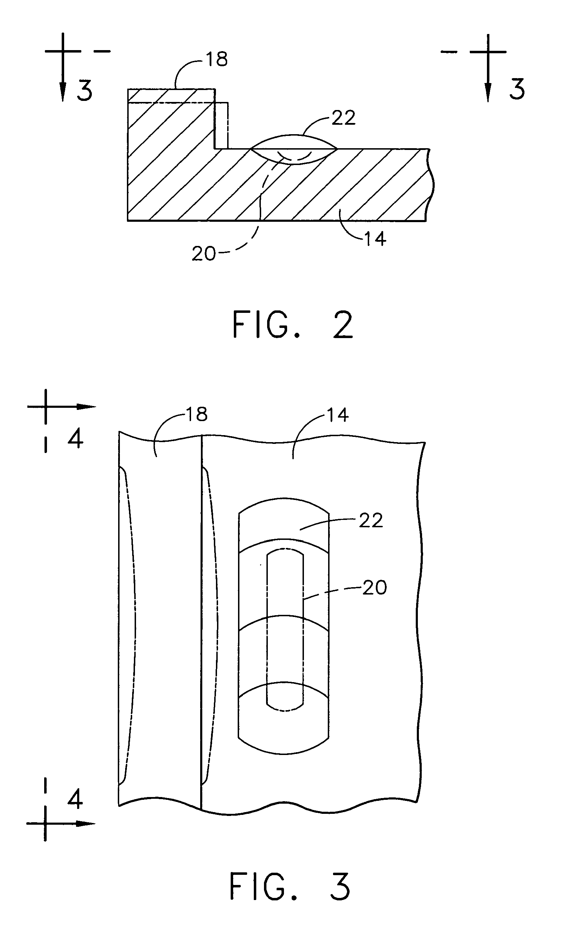

Figures 2, 3, and 4 illustrate the effects of a weld repair conducted with prior art techniques. In these Figures, a weld 22 has been created by depositing a filler material into the defect 20. Upon cooling after application, the weld 22 contracts, creating residual tensile stresses and distorting nearby features in all three principal directions. In effect, these features are "pulled" towards the center of the weld 22. The forward flange 18 is distorted in axial, radial, and circumferential directions, as shown in by the dashed lines in Figures 2, 3, and 4. The degree of distortion is greatly exaggerated in these Figures for illustrative purposes. However, a component such as the forward flange 18 typically has an acceptable dimensional tolerance of only a few thousandths of an inch, and so a relatively small amount of distortion can render the casing 10 unusable. It is known to post-heat-treat and/or peen welds to relieve tensile stresses therein. However, these processes do nothing to restore the component dimensions.

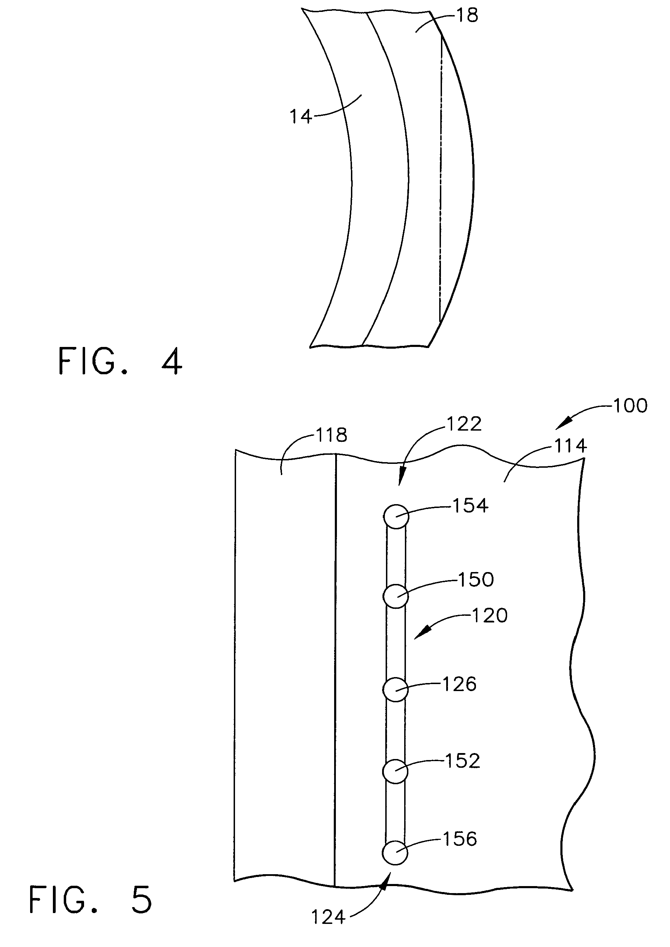

Accordingly, the present invention provides a method in which a weld repair is completed in small steps, and the distortion caused by each weld is reversed through a cold working process before the next weld is completed. Figure 5 illustrates this method as applied to the a casing 100 substantially identical to the casing 10. The casing 100 includes a cylindrical forward section 114 and a forward flange 118. A weld area 126 having a first end 122 and a second end 124 is disposed on the casing 100. The term "weld area" is used generally to refer any area in which it is desired to create a weld by application of heat, with the optional addition of a filler material. In most instances the weld area 120 will be a defect of some sort, such as a crack, dent, gouge, or the like, which needs to be joined together or filled. The first step of the process is to properly prepare the weld area 120 in accordance with known procedures. For example, the weld area 120 may be subjected to chemical or mechanical cleaning to remove grease, oils, and foreign matter. If necessary, the weld area 120 may be ground or otherwise formed into an acceptable shape to allow access for the welding equipment and to permit a full-penetration weld.

After the weld is prepared, a first tack weld 126 is applied to the weld area 120. As is known in the art, a "tack weld" is a small area of a part which is fusion-welded by a brief application of welding heat and optionally, a filler material. Any known welding processes may be used to produce the first tack weld 126. One example of a suitable process is tungsten inert gas (TIG) welding. The purpose the first tack weld 126 is to quickly create a join, thus using the least amount of heat input and minimizing distortion. The first tack weld 126 is preferably applied substantially at the center of the weld area 120 so that the heating and distortion is symmetrical relative to the weld area 120.

As the first tack weld 126 cools and solidifies, it undergoes significant contraction. This causes residual tensile stress in all three principal directions of the material, which is observed as deviation (i.e. elastic deflection) in axial, radial, and circumferential directions in the forward flange 118.

The first tack weld 126 is then cold-worked to restore its initial dimensions.

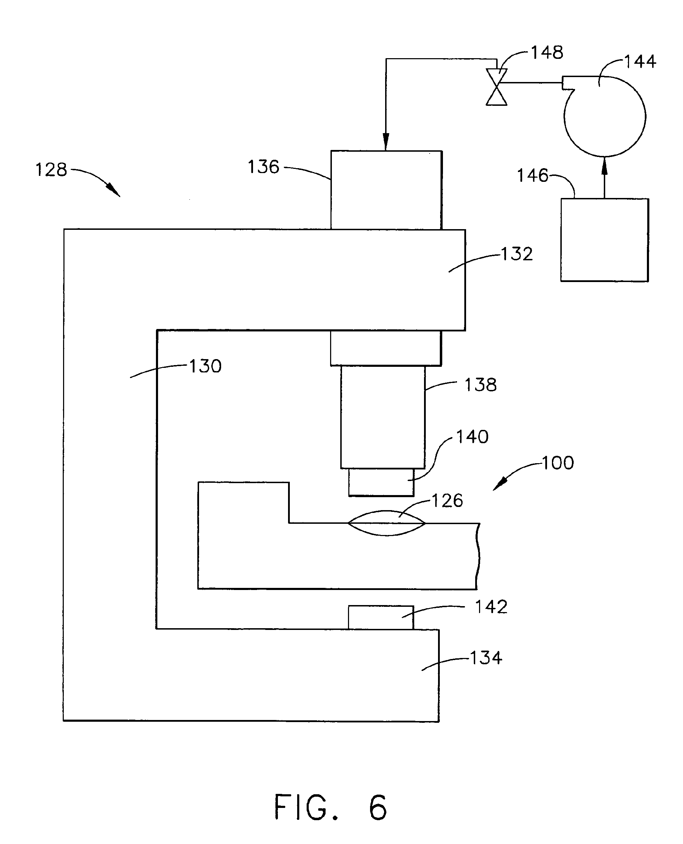

Figure 6 illustrates a press 128 which is representative of a suitable means for cold-working the first tack weld 126. The press 128 comprises a generally C-shaped body 130 having spaced-apart first and second ends 132 and 134. The first end 132 has a hydraulic cylinder 136 of a known type attached thereto. A rod 138 of the cylinder 136 carries a relatively small, button-shaped first anvil 140 at its end. A relatively small, button-shaped second anvil 142 is attached to the second end of the body 130 of the press 128. The hydraulic cylinder 136 is connected to an appropriate means for delivering a flow of pressurized hydraulic fluid thereto, such as illustrated pump 144, reservoir 146, and control valve 148 shown.

The press 128 is only one example of a suitable tool for the cold-working process. Any device which can apply substantial compressive force and cold-work to the weld area 120 may be used.

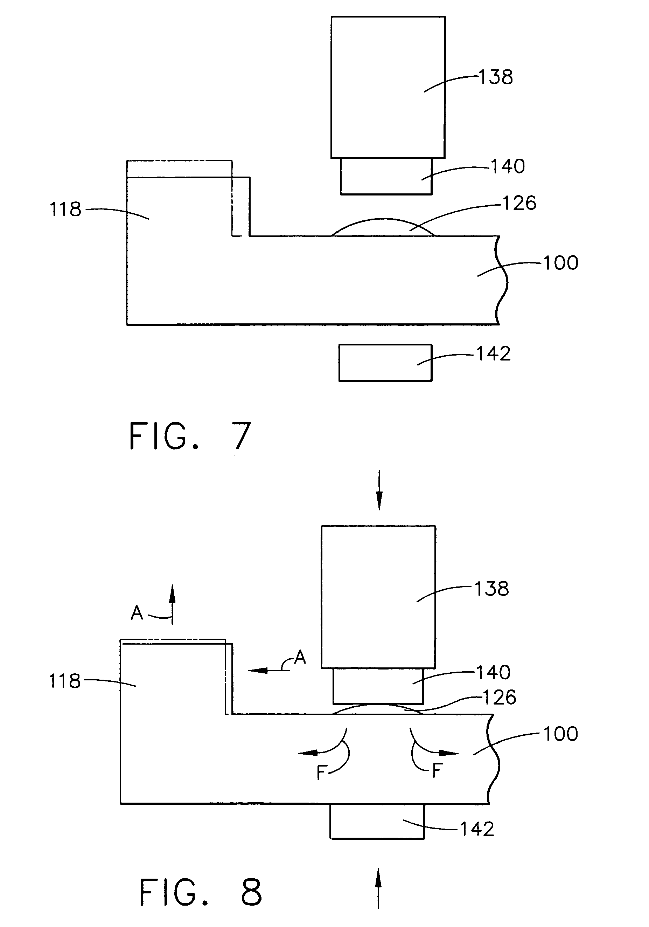

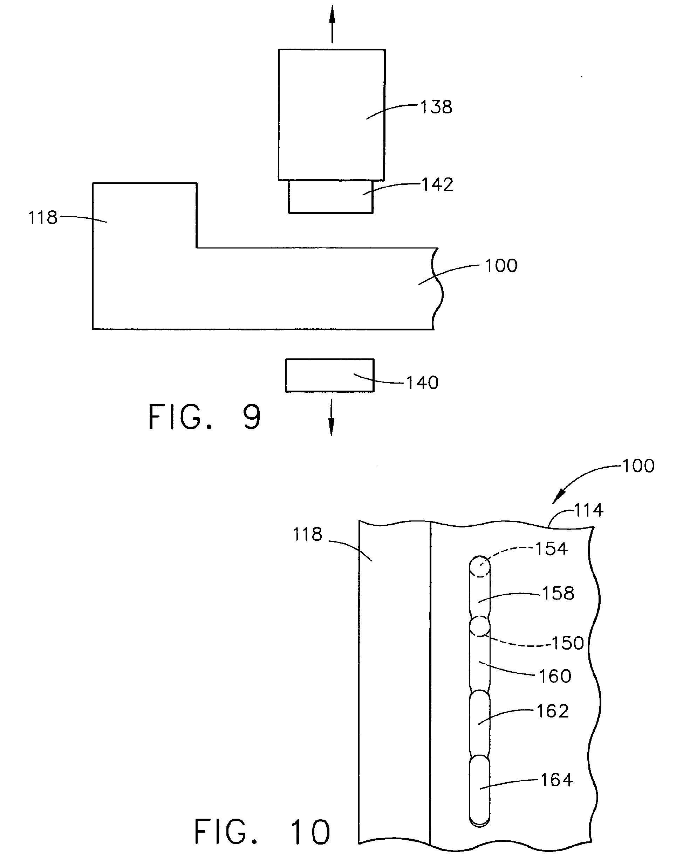

The cold-working process is illustrated in Figures 7, 8, and 9. In these Figures, the desired position of the forward flange 118 (in most cases is its original position) is shown in dashed lines, while the actual position is shown in solid lines. The cold work step is carried out by positioning the press 128 so that the first and second anvils 140 and 142 are collinear and are aligned with the first tack weld 126 (see Figure 7). As shown in Figure 8, the cylinder 136 is then actuated to bring the anvils 140 and 142 together on opposite sides of the first tack weld 126 and compress it. Sufficient pressure is applied to significantly compress and cold work the first tack weld 126. The tensile stresses in the first tack weld 126 are relieved, putting it in a state of residual compressive stress. Material is forced together and extruded outward from the center of the first tack weld 126, as shown by the arrows "F". In essence, the distortion caused by the weld solidification is reversed. This causes nearby features such as the forward flange 118 to move back towards their original position, reversing the deviation thereof, as shown by the arrows "A". When the cold-working process is complete, the first and second anvils 140 and 142 are retracted (see Figure 9). The cold-working process is continued until the forward flange 118 is in the desired position.

Process control of the cold-working procedure may be implemented in a number of ways. In performing the cold working step, the operating parameters may vary greatly. The anvil size and shape, duration of compression, speed of anvil movement, and applied pressure may all be varied. Rather than attempting to determine the correct parameters directly, the process may be controlled by observation and/or measurement of a component feature. For example, as described above, the deviation of the forward flange 118 in one or more directions may be observed, and the cold working procedure may be continued until the deviation is reduced to zero, or at least to within standard allowable tolerances. This method of control minimizes the complexity of the measurement and also minimizes any additional rework required to get the forward flange 118 back to a desired position. This process is especially beneficial because the results can be observed directly, and if necessary the process can be carried out in a series of incremental steps to avoid overshooting the desired results.

After the first cold-working step, a second tack weld 150 is applied to the weld area 120 in the same manner as the first tack weld 126. Preferably, the second tack weld 150 is applied to a location approximately halfway between the first tack weld 126 and the first end 122 of the weld area 120. After the second tack weld 150 solidifies, it is cold-worked it the manner described above.

These steps of tack-welding followed by cold-working are repeated in sequence until the entire weld area 120 is sufficiently "tacked" to stabilize it during a subsequent welding process. The number and spacing of tack welds applied to the weld area 120 is determined in accordance with known procedures. in the illustrated example first, second, third, fourth, and fifth tack welds, labeled 126, 150, 152, 154, and 156, respectively, are spaced about 2.5 cm (1 inch) apart, and are applied in an alternating sequence relative to the center of the weld area 120. By using this sequence of steps, distortion is minimized and the cold-working process is never required to restore more distortion than that created by a single weld.

After the tack welding is complete, the weld area 120 is fully welded in small increments. In general, each weld extends between neighboring tack welds. Figure 10 shows first, second, third, and fourth exemplary welds labeled 158, 160, 162, and 164, respectively. After each weld solidifies, it is cold worked in the manner described above relative to the tack welds. This sequence of welding followed by cold working is repeated until the desired weld coverage is achieved. As with the tack welds, this process is never required to restore distortion more than that created by a single weld. Depending upon the requirements of the particular application, the weld area 120 may be totally bonded, or some percentage less that 100% may be covered. In the illustrated example of a "build-up" type repair, 100% coverage would generally be used.

If desired, all or a part of the casing 100 may be heat-treated after the welding and cold working method as described above, while retaining the benefit of the cold working. To the extent necessary, additional procedures such as metal spray build-up and machining may be carried out on the forward flange 118 using known techniques.

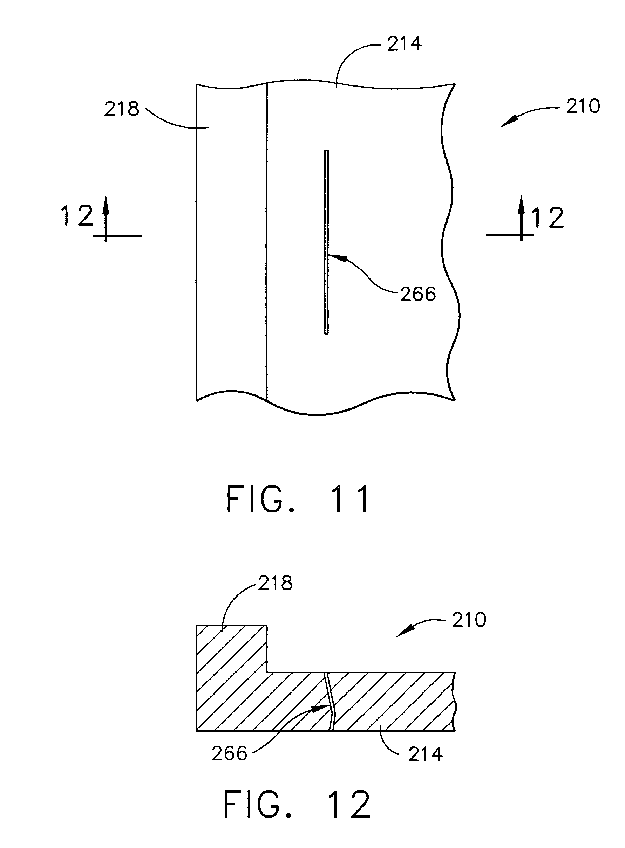

Figures 11-16 illustrate another exemplary repair process with respect to a combustion casing 210 which is substantially similarto the casing 210 and which has a generally cylindrical forward section 214. A radially upstanding forward flange 218 extends around the front end of the forward section 214. In this example, the casing 210 has a crack 266 extending through the thickness of the casing 210 disposed in the forward section 214 near the forward flange 218, as shown in Figures 11 and 12.

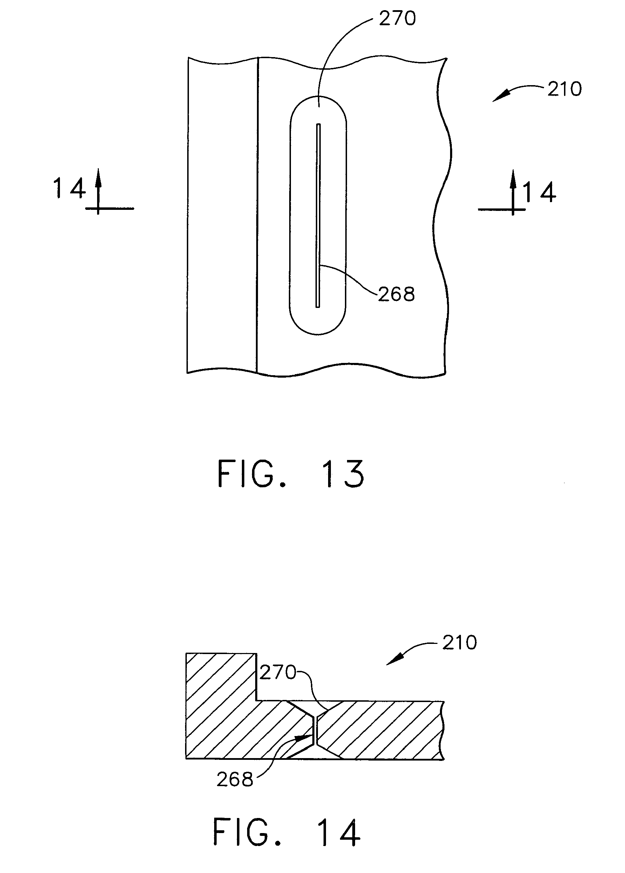

The first step of the process is to properly prepare the area around the crack 266 in accordance with known procedures. For example, the crack 266 may be subjected to chemical or mechanical cleaning to remove grease, oils, and foreign matter. The crack 266 is completely ground out or otherwise removed, and a narrow kerf 268, for example about 1.5 mm (0.060 in.) wide, is cut at the former crack location. The prepared weld area is shown in Figures 13 and 14. Depending on the thickness of the casing 210, a chamfered area 270 may be ground out on each side of the crack location, to ensure full weld penetration.

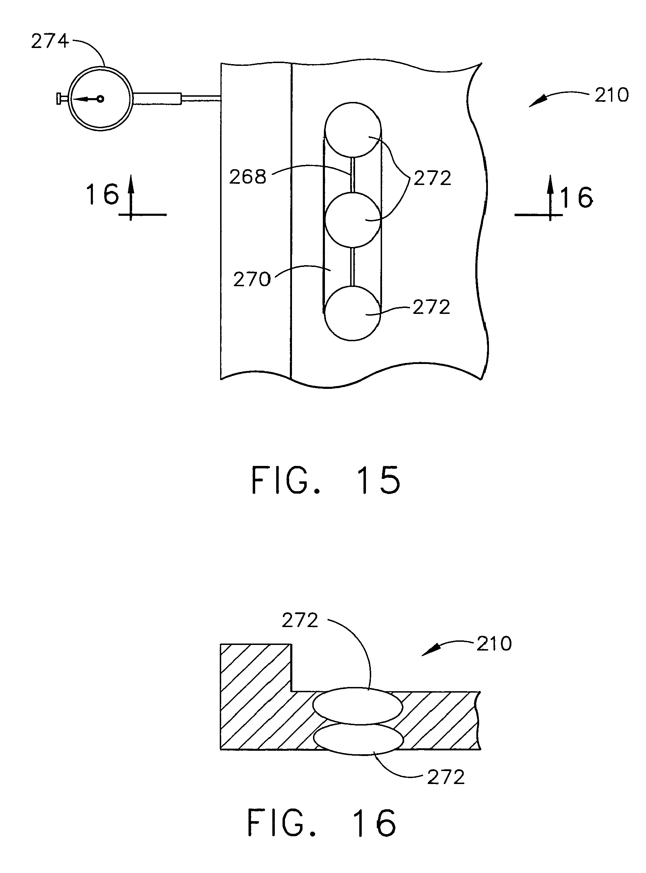

After the casing 210 is prepared, a series of tack welds 272, shown in Figures 15 and 16, are applied to both sides of the casing 210. The tack welds 272 are applied in an alternating sequence relative to the center of the kerf 268, in the manner described above. After each tack weld 272 is applied, it is cold-worked to restore the pre-welding dimensions of the casing 210, for example using the press 128 illustrated in Figure 6, as described above. The cold-working process may be controlled by observation and/or measurement of a component feature. For example, a dial travel indicator 274 of a known type may be used to measure the position of the forward flange 218 during the cold-working procedure.

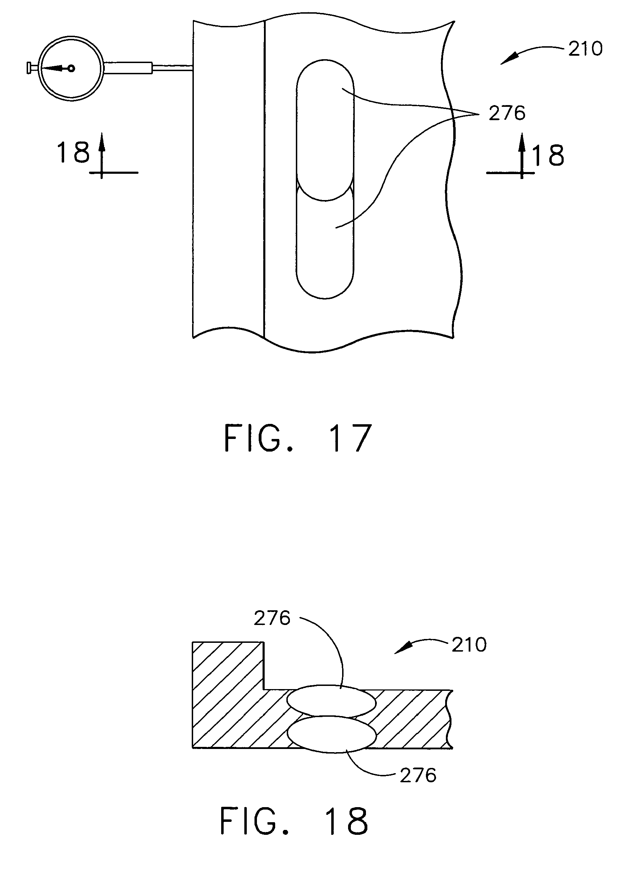

After the tack welding is complete, the kerf 268 is fully welded in small increments. In general, each weld extends between neighboring tack welds. Figures 17 and 18 show several exemplary welds labeled 276. After each weld solidifies, it is cold worked in the manner described above relative to the tack welds 272. This sequence of welding followed by cold working is repeated until the desired weld coverage is achieved. As with the tack welds, this process is never required to restore distortion more than that created by a single weld. Once the welding and cold-working is complete, the casing 210 may be subjected to additional procedures such as heat treatment and finish machining.

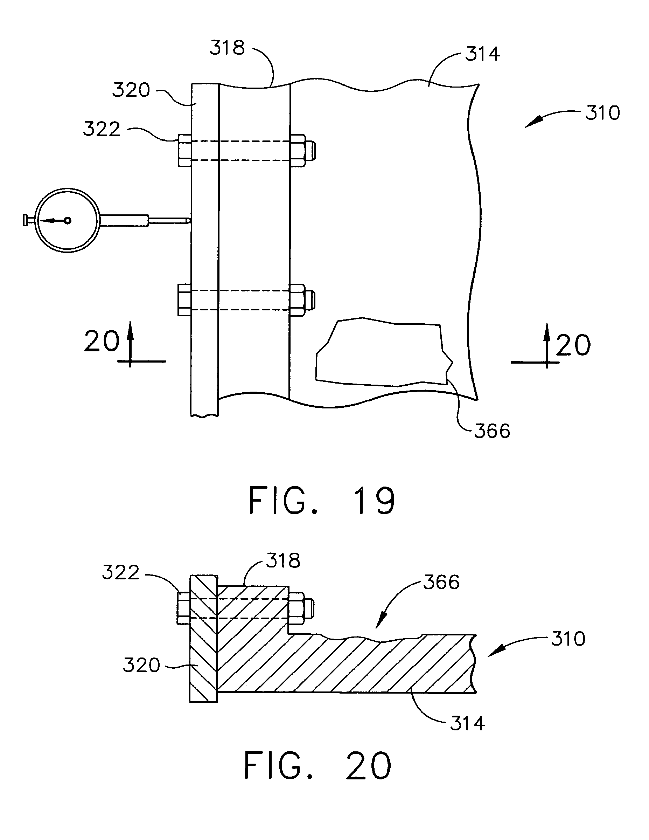

Figures 19-22 illustrate yet another exemplary repair process. In the illustrated example, a combustion casing 310 is substantially similar to the casing 210 and has a generally cylindrical forward section 314. A radially upstanding forward flange 318 extends around the front end of the forward section 314. In this example, the casing 310 has a damaged area 366 such as a gouge disposed in the forward section 314 near the forward flange 318.

Optionally the damaged area 366 may be cold worked in a known manner to restore it close to its original form and dimensions. Next, the area around the damaged area 366 is prepared in accordance with known procedures. For example, the damaged area 366 may be subjected to chemical or mechanical cleaning to remove grease, oils, and foreign matter. The damaged area 366 is completely ground out to remove any foreign material and provide a uniform base for a weld repair. An annular restraining ring 320, only a portion of which is shown in Figures 19 and 20, is attached to the forward flange 318 with fasteners 322. The purpose of the restraining ring 320 is to maintain the casing's roundness during the weld repair.

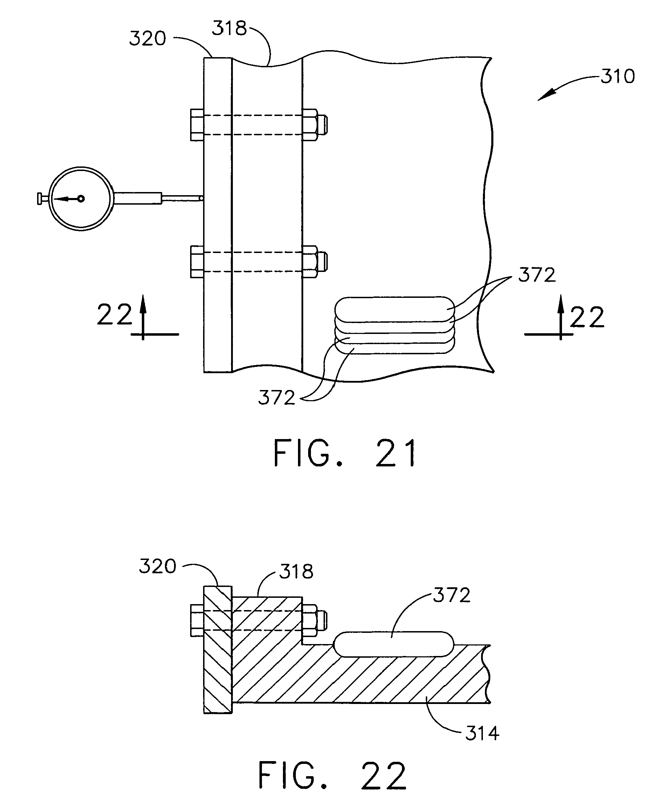

After the casing 310 is prepared, a series of axially-extending welds 372 are applied to the casing 310 at the location of the damaged area 366, as shown in Figures 21 and 22. Each weld 372 slightly overlaps the adjacent weld 372 to ensure full coverage. In the illustrated example each weld bead 372 is about 5 cm (2 in.) long and about 2.5 mm (0.1 in.) wide. After several welds 372 are applied, They are cold-worked to restore the pre-welding dimensions of the casing 372, for example using the press 128 illustrated in Figure 6 in the manner described above. The cold-working process may be controlled by observation and/or measurement of a component feature. For example, a dial travel indicator 374 of a known type may be used to measure the position of the forward flange 318 during the cold-working procedure.

This sequence of welding followed by cold working is repeated until the desired weld coverage is achieved. Once the entire damaged area 366 is welded, the restraining ring 320 is removed. Any remaining axial deviation may be removed by further cold working. Once the welding and cold-working is complete, the casing 210 may be subjected to additional procedures such as heat treatment and finish machining. The method described above may be used with many different types of components and defects therein. The tooling requirements for this process are minimal. Aside from any fixturing required to apply the welds, the only tooling or fixtures required is the press 128 or equivalent tool for cold-work, and any adapters or other tooling required reach the location of the weld. The ability of the present invention to restore geometric features extremely close to their desired positions minimizes, and potentially eliminates, costly subsequent procedures such as metal spray build up and machining, and the shop time associated therewith.

The foregoing has described a method for systematically creating weld repairs.

## Claims

1. A method for welding a component (100), comprising the steps of:
selecting a weld area (120) in said part, said weld area (120) being located near a feature of interest;
applying a first weld (126, 158) to a portion of said weld area (120), wherein solidification of said first weld (126, 158) causes deviation of said feature from a desired position; and
cold working said first weld (126, 158) so as to impart plastic deformation therein to a degree that material is extruded outward from said first weld (126, 158), and said deviation is at least partially reversed.

2. The method of claim 1 further comprising:
applying a second weld (150, 160) to said damaged area, wherein solidification of said second weld (150, 160) causes deviation of said feature from a desired position; and
cold working said second weld (150, 160) so as to impart plastic deformation therein to a degree that material is extruded outward from said second weld (150, 160), and said deviation is at least partially reversed.

3. The method of claim 2 wherein said second weld (150, 160) is applied to said weld (120) area between said first weld (126, 158) and a first end (122, 132) of said weld area (120).

4. The method of claim 2 further comprising :
applying subsequent welds and
cold working each weld area (120) after each subsequent weld is applied; and
repeating said steps of weld (22) application and cold working until a selected degree of weld coverage is completed.

5. The method of claim 4 wherein each of said welds is applied in an alternating pattern relative to a center of said weld area (120).

6. The method of claim 1 further including:
monitoring said deviation; and
continuing cold working said first weld (126, 158) until said deviation is substantially eliminated.

7. The method of claim 1 further including:
monitoring said deviation; and
incrementally cold working said first weld (126, 158) until said deviation is substantially eliminated.

8. The method of claim 1 wherein said feature is a flange (118).

9. The method of claim 1 further including heat-treating said component (100) after said cold working is complete.

10. The method of claim 1 further comprising applying a metal spray build up to said feature after said cold working is complete.
